Europäisches Patentamt

European Patent Office

Office européen des brevets

(11) Numéro de publication: **0 169 747**
**B1**

(12) **FASCICULE DE BREVET EUROPEEN**

(45) Date de publication du fascicule du brevet:
**27.01.88**

(21) Numéro de dépôt: **85401003.0**

(22) Date de dépôt: **21.05.85**

(51) Int. Cl.⁴: **B 60 R 19/18**

(54) **Pare-chocs pour véhicule.**

(30) Priorité: **27.06.84 FR 8410161**

(43) Date de publication de la demande:
**29.01.86 Bulletin 86/5**

(45) Mention de la délivrance du brevet:
**27.01.88 Bulletin 88/4**

(84) Etats contractants désignés:
**BE DE GB IT**

(56) Documents cités:
**FR - A - 2 386 432**
**GB - A - 2 118 489**
**US - A - 4 364 591**

(73) Titulaire: **AUTOMOBILES PEUGEOT, 75, avenue de la
Grande Armée, F-75116 Paris (FR)**
Titulaire: **AUTOMOBILES CITROEN, 62 Boulevard
Victor-Hugo, F-92200 Neuilly-sur-Seine (FR)**

(72) Inventeur: **Samson, Patrick, 47 Avenue de la Paix,
F-94260 Fresnes (FR)**

(74) Mandataire: **Durand, Yves Armand Louis et al, Cabinet Z.
Weinstein 20, Avenue de Friedland, F-75008 Paris (FR)**

ACTORUM AG

**Description**

La présente invention se rapporte d'une manière générale à un pare-chocs et concerne plus particulièrement les moyens de fixation de ce pare-chocs sur un véhicule automobile.

On connaît des pare-chocs pour véhicule automobile comprenant une partie transversale pouvant être fixée sur la partie avant ou arrière du véhicule, ainsi que des extrémités rabattues latéralement et pouvant être fixées par des moyens de guidage et de verrouillage sur les ailes de ce véhicule.

C'est ainsi que le document GB-A-2 118 489, selon les caractéristiques du préambule de la revendication 1, décrit un pare-chocs dont la partie transversale est fixée sur le véhicule au moyen de boulons et dont les extrémités rabattues sont fixées au moyen de tétons s'engageant par coulissement dans des supports solidaires de la carrosserie.

On connaît également, d'après le document FR-A-2 386 432, des pare-chocs avec extrémités rabattues comportant des pièces de guidage venant en prise avec un élément en forme de rail solidaire de la carrosserie du véhicule.

Toutefois la fixation de la partie transversale et des extrémités rabattues du pare-chocs est telle que le montage ou le démontage du pare-chocs constitue une opération exigeant un certain temps et par conséquent coûteuse. En outre, sous l'effet d'un accident par exemple, le pare-chocs présente une certaine tendance à se séparer ou se détacher du véhicule sur lequel il est monté.

Il convient par conséquent de proposer sur le marché un pare-chocs perfectionné qui puisse être fixé très solidement sur un véhicule, qui soit également facile à monter ou à démonter et qui n'ait pas tendance à se détacher du véhicule.

A cet effet, l'invention a pour objet un pare-chocs pour véhicule automobile, du type comprenant une partie transversale pouvant être fixée sur la partie avant ou arrière du véhicule, ainsi que des extrémités rabattues latéralement et pouvant être fixées par des moyens de guidage et de verrouillage sur les ailes de ce véhicule, caractérisé en ce que lesdits moyens de guidage et verrouillage coopèrent avec des moyens de clippage de la partie transversale du pare-chocs lors du verrouillage des extrémités rabattues de ce pare-chocs pour en interdire ainsi le démontage involontaire.

Suivant une autre caractéristique de l'invention, les moyens de clippage sont constitués par au moins deux éléments tronconiques élastiquement déformables supportés par le côté intérieur du pare-chocs et comportant chacun une extrémité convergente dirigée vers l'extérieur de celui-ci, ces deux éléments s'engageant par clippage dans des coupelles métalliques solidaires des longerons du véhicule.

On précisera encore ici que les éléments tronconiques sont des parois tronconiques creuses venant de matière avec le pare-chocs et renforcées par des nervures.

Selon encore une autre caractéristique de l'invention, les moyens de guidage et de verrouillage précités sont constitués par des rainures sensiblement horizontales ménagées dans des bossages prévus sur les côtés internes des extrémités rabattues, et dans lesquelles rainures s'engagent des pions solidaires des ailes du véhicule.

Chaque rainure précitée se termine avantageusement par une extrémité sensiblement verticale apte à verrouiller le pare-chocs par pivotement des extrémités rabattues.

L'invention est présentée dans un mode de réalisation par la description détaillée qui suit et se réfère aux dessins annexés, donnés uniquement à titre d'exemple et dans lesquels:

la figure 1 est une demie-vue de face montrant le côté arrière du pare-chocs;

la figure 2 est une demie-vue de dessus du pare-chocs montré sur la figure 1;

la figure 3 est une vue en coupe faite suivant la ligne III-III de la figure 1 et montrant le pare-chocs clippé sur la partie avant ou arrière du véhicule;

la figure 4 est une vue en coupe de l'une des extrémités rabattues du pare-chocs, suivant la ligne IV-IV de la figure 2;

la figure 5 est une vue partielle agrandie et de profil, suivant la flèche V de la figure 4, des rainures équipant les extrémités rabattues du pare-chocs, et

la figure 6 est une vue en coupe faite suivant la ligne VI-VI de la figure 1.

Suivant un exemple de réalisation, et en se reportant aux dessins annexés, un pare-chocs 1 conforme à l'invention comprend essentiellement une partie transversale 2 comportant des moyens de clippage 3 pour permettre sa fixation sur l'avant ou l'arrière d'un véhicule, ainsi que des extrémités rabattues 4 comportant des moyens 5 de guidage et de verrouillage sur les ailes 6 du véhicule.

Les moyens de clippage 3 viennent de matière ou de moulage avec le pare-chocs qui constitue une seule pièce en matière plastique.

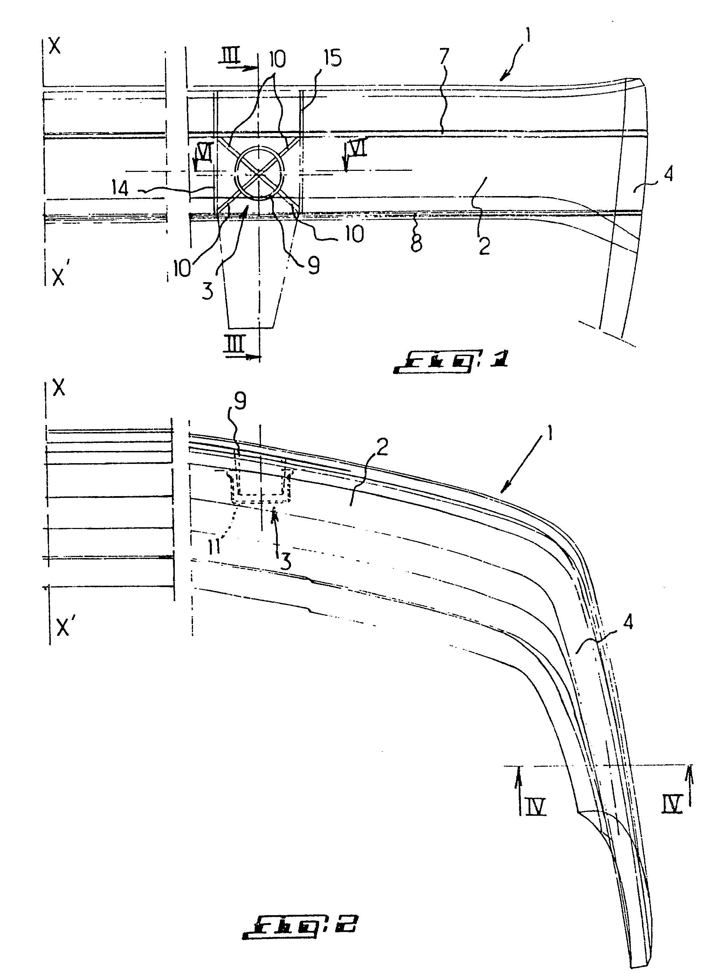

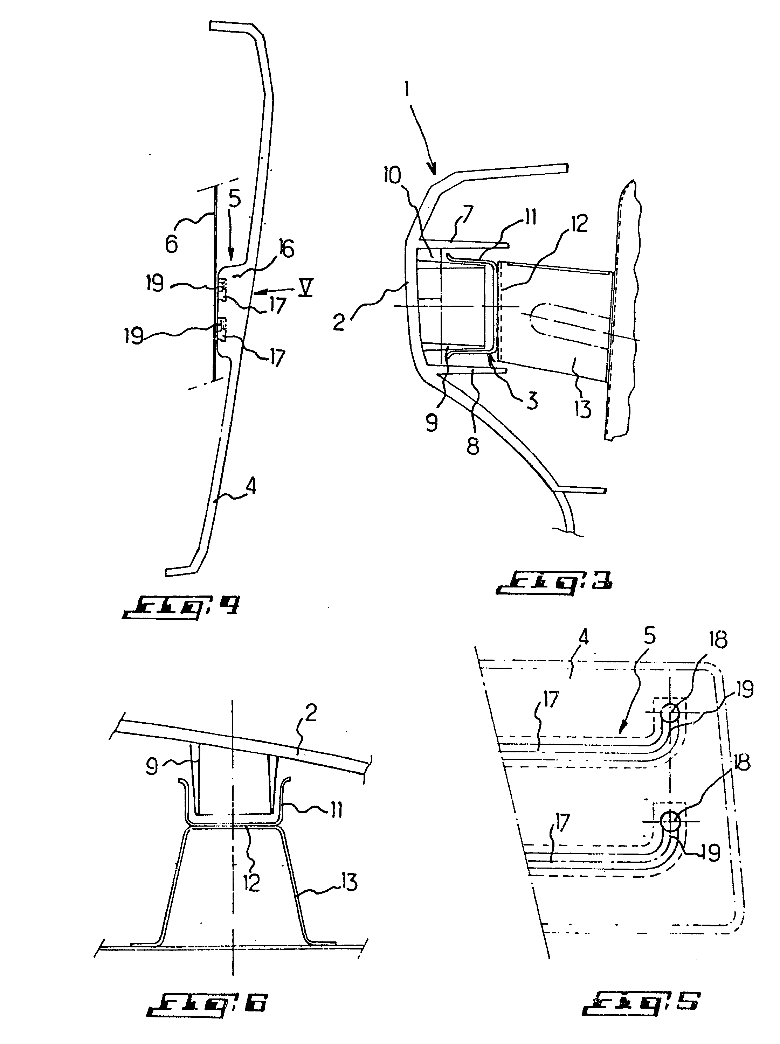

Ces moyens de clippage 3 sont disposés entre deux nervures longitudinales 7, 8 parcourant toute la longueur de la partie transversale 2 et une partie des extrémités rabattues 4. Ils sont constitués par deux éléments tronconiques creux 9 intérieurement, rattachés à la partie transversale 2 du pare-chocs et renforcés par des nervures obliques 10 dont les longueurs sont compatibles avec la profondeur de pénétration d'une coupelle métallique 11 fixée en 12 sur un longeron 13 du véhicule, et dans laquelle s'engage par clippage l'élément tronconique 9 comme on le voit bien sur la figure 3.

Les éléments tronconiques 9 possèdent une extrémité convergente dirigée vers l'extérieur du pare-chocs 1, et deux nervures verticales 14 et 15 bien visibles sur la figure 1 rattachent ces éléments aux nervures longitudinales 7 et 8.

Les moyens de guidage et de verrouillage 5 situés sur la face interne de chaque extrémité rabattue 4 du pare-chocs, comprennent un bossage 16 dans lequel sont ménagées deux rainures longitudinales et parallèles 17 à l'intérieur desquelles s'engagent respectivement deux pions 18 portés par les ailes 6 du véhicule et qui sont bien visibles sur la figure 5.

La longueur du clippage de l'élément tronconique 9 dans la coupelle 11 est approximativement égale à la longueur des rainures 17 afin que le coulissement des pions 18 guidés dans les rainures puisse se faire.

Lorsque le clippage est achevé et que l'élément tronconique 9 est engagé à fond dans la coupelle 11, les pions 18 parviennent à l'extrémité des rainures 17 qui, à cet endroit, remontent comme on le voit bien sur la figure 5, pour former des extrémités de rainure sensiblement verticales 19.

Ainsi, comme on le comprend, il suffit de faire pivoter vers le bas les extrémités rabattues 4 pour que les pions 18 s'engagent dans les parties verticales 19 des rainures 17. Dans ces conditions, le pare-chocs 1 est verrouillé et il n'est plus possible de l'extraire ou de le démonter involontairement.

On a donc réalisé suivant l'invention un pare-chocs qui peut être facilement et solidement fixé et verrouillé sur l'avant ou sur l'arrière d'un véhicule automobile, mais qui peut être commodément déverrouillé et démonté en un minimum de temps.

## Revendications

1. Pare-chocs pour véhicule automobile, du type comprenant une partie transversale (2) pouvant être fixée sur la partie avant ou arrière du véhicule, ainsi que des extrémités (4) rabattues latéralement et pouvant être fixées par des moyens (5) de guidage et de verrouillage sur les ailes (6) de ce véhicule, caractérisé en ce que lesdits moyens (5) de guidage et verrouillage coopèrent avec des moyens (3) de clippage de la partie transversale 62) du pare-chocs (1) lors du verrouillage des extrémités rabattues (4) de ce pare-chocs pour en interdire ainsi le démontage involontaire.

2. Pare-chocs selon la revendication 1, caractérisé en ce que les moyens de clippage (3) sont constitués par au moins deux éléments tronconiques (9) élestiquement déformables supportés par le côté intérieur du pare-chocs (1) et comportant une extrémité convergente dirigée vers l'extérieur de celui-ci, ces deux éléments s'engageant par clippage dans des coupelles métalliques (11) solidaires des longerons (13) du véhicule.

3. Pare-chocs selon la revendication 2, caractérisé en ce que les éléments tronconiques (9) sont des parois tronconiques creuses venant de matière avec le pare-chocs (1) et renforcées par des nervures (10).

4. Pare-chocs selon la revendication 1, caractérisé en ce que les moyens (5) de guidage et verrouillage précités sont constitués par des rainures sensiblement horizontales (17) ménagées dans des bossages (16) prévus sur les côtés internes des extrémités rabattues (4), et dans lesquelles rainures s'engagent des pions (18) solidaires des ailes (6) du véhicule.

5. Pare-chocs selon la revendication 4, caractérisé en ce que chaque rainure (17) se termine par une extrémité sensiblement verticale (19) apte à verrouiller les moyens (3) de clippage du pare-chocs par pivotement des extrémités rabattues (4).

## Patentansprüche

1. Stossfänger für Kraftfahrzeug, der Gattung mit einem an einem Vorder- bzw. Hinterteil des Fahrzeugs befestigbaren Querteil (2) sowie durch Führungs- und Verriegelungsmittel (5) an den Kotflügeln (6) dieses Fahrzeugs befestigbaren seitwärts zurückgebogenen Enden (4), dadurch gekennzeichnet, dass die besagten Führungs- und Verriegelungsmittel (5) mit Klemmitteln (3) für den Querteil (2) des Stossfängers (1) bei der Verriegelung der zurückgebogenen Enden (4) dieses Stossfängers zusammenwirken, um somit das unbeabsichtigte Abnehmen desselben zu verbieten.

2. Stossfänger gemäss Anspruch 1, dadurch gekennzeichnet, dass die Klemmittel (3) aus wenigstens zwei elastisch verformbaren, kegelstumpfförmigen, von der inneren Seite des Stossfängers (1) getragenen und ein nach aussen desselben gerichtetes zusammenlaufendes Ende aufweisenden Elementen bestehen, wobei diese beiden Elemente durch Einklemmen in mit den Längsträgern (13) des Fahrzeugs verbundenen Metallschalen (11) eingreifen.

3. Stossfänger nach Anspruch 2, dadurch gekennzeichnet, dass die kegelstumpfförmigen Elemente (9) kegelstumpfförmige hohle an dem Stossfänger (1) einstückig angeformte und durch Rippen (10) verstärkte Wandungen sind.

4. Stossfänger nach Anspruch 1, dadurch gekennzeichnet, dass die vorgenannten Führungs- und Verriegelungsmittel (5) aus im wesentlichen waagerechten in an den inneren Seiten der zurückgebogenen Enden (4) vorgesehenen Wulsten (16) angeordneten Nuten (17) bestehen, in welche Nuten an den Kotflügeln (16) des Fahrzeugs befestigte Stifte (18) eingreifen.

5. Stossfänger gemäss Anspruch 4, dadurch gekennzeichnet, dass jede Nut (17) in ein im wesentlichen senkrechtes Ende (19) ausläuft, welches geeignet ist, die Klemmittel (3) des Stossfängers durch Verschwenken der zurückgebogenen Enden (4) zu verriegeln.

## Claims

1. Bumper for automotive vehicle of the kind comprising a cross-portion (2) which may be secured to the front or rear part of the vehicle as well as ends (4) laterally turned back which may be secured by guiding and locking means onto the fenders (6) of this vehicle, characterized in that the said guiding and locking means (5) co-operate with clip-on means (3) for the cross-portion (2) of the number (1) upon locking of the turned-back ends (4) of this bumper to thus prevent the unintentional removal thereof.

2. Bumper according to claim 1, characterized in that the clip-on means (3) consist of at least two resiliently deformable frusto-conical elements (9) supported by the inside of the bumper (1) and comprising a convergent end directed outwards thereof, these two elements engaging in clip-on relationship metal cups (11) made fast with the girders (13) of the vehicle.

3. Bumper according to claim 2, characterized in that the frusto-conical elements (9) are frusto-conical hollow walls integral with the material of the bumper (1) and reinforced with ribs (10).

4. Bumper according to claim 1, characterized in that the aforesaid guiding and locking means (5) consist of substantially horizontal grooves (17) formed in bosses (16) provided on the inner sides of the turned-back ends (4) and which grooves are engaged by studs (19) made with the fenders (6) of the vehicle.

5. Bumper according to claim 4, characterized in that each groove (17) terminates in a substantially vertical end (19) capable of locking the clip-on means (3) of the bumper through pivoting of the turned-back ends (4).

X

III → 10 15 7 1

VI

14 VI

10 4

10 10 2

10 9 8

X'

3

III →

*Fig. 1*

X

9

11 2 1

3

X'

4

IV IV

*Fig. 2*

Fig. 4

Fig. 3

Fig. 6

Fig. 5